# EUROPEAN PATENT SPECIFICATION

(11) **EP 3 118 082 B1**
(45) Date of publication and mention of the grant of the patent: **14.06.2017**
(21) Application number: 15382363.8
(22) Date of filing: 13.07.2015
(51) Int. Cl.: B62B 9/22, A47D 9/04

(54) **APPARATUS FOR ROCKING BABY STROLLERS OR SIMILAR DEVICES**
GERÄT ZUM SCHAUKELN VON KINDERWÄGEN ODER ÄHNLICHEN VORRICHTUNGEN
DISPOSITIF POUR BALANCER POUSSETTES OU DISPOSITIFS SIMILAIRES

(43) Date of publication of application: 18.01.2017
(73) Proprietor: Ekide, S.L., 20500 Arrasate - Mondragon (ES)
(72) Inventor: DIEZ FERNANDEZ, Xabier, 20500 ARRASATE - MONDRAGON (ES); ERRASTI BASABE, Iosu, 20540 ESKORIATZA (ES)
(74) Representative: Igartua, Ismael

(56) References cited:
- WO-A2-2009/031145
- FR-A1- 2 405 674
- US-A- 3 820 614
- US-A1- 2012 220 819

## Description

### TECHNICAL FIELD

The present invention relates to apparatuses for rocking baby strollers, generally to apparatuses for rocking devices for babies comprising wheels, for the purpose of calming the baby or putting the baby to sleep comfortably in said device.

### PRIOR ART

Rocking a baby stroller is known to cause an effect on babies calming them and/or putting them to sleep. Under normal conditions, a person is responsible for rocking the stroller to cause its rocking movement, which can be a tiring and uncomfortable operation for said person.

Devices automatically causing said rocking movement are known, such that the person responsible for rocking the stroller only needs to associate said device with the stroller in order to generate the desired effect on the baby, making their work easier. Most known devices are not easy to handle, particularly as regards their manageability, so the use thereof is limited exclusively to home.

Devices solving this problem, such as that disclosed in patent document WO2009031145A2, are also known. The device disclosed in this patent document comprises a motor with a motor shaft, a drive for directly causing the rocking movement of the stroller based on the rotation of the motor shaft, and a mechanism which is attached to the motor shaft and the drive for transmitting the rotation of the motor shaft to said drive in the form of rocking movement. The drive corresponds with a curved platform on which a stroller wheel is arranged, and the mechanism causes repetitive swinging of the platform in both directions, in response to the rotation of the motor shaft. This movement of the drive causes the rocking movement of the stroller the wheel of which is arranged on said platform.

FR2405674 discloses a mechanism for rocking one or more babies at a time, and is connected to cot or pram. It comprises a motor with a corresponding output shaft. The output shaft has an axle and the motor operates at right angles to the direction of movement required, parallel to the rotational axes of the pram wheels. The output shaft consists of a pin parallel to the axle and eccentrically positioned in relation to the axle. The mechanism is fixed to the pram or cot by means of a lever pivot-mounted on axle parallel to the rotational axle of the output shaft.
US3820614A discloses a device for producing reciprocal motion of a baby carriage, or other wheeled vehicle, said device comprising a motor with an eccentric, a linkage operatively connecting the eccentric to one of the carriage wheels, and means for conveniently mounting the motor to the carriage framework and permitting adjustment of the motor's spacing relative to the wheel to select the desired angular displacement of the reciprocal movement imparted to the wheel.

### DISCLOSURE OF THE INVENTION

The object of the invention is to provide an apparatus for rocking baby strollers or other devices for babies comprising wheels with improved handling and power consumption. This object is achieved by an apparatus as defined in the claims.
The apparatus comprises a motor with a motor shaft, a drive for directly causing the rocking movement of the stroller based on the rotation of the motor shaft, and a mechanism which is attached to the motor shaft and the drive for transmitting the rotation of the motor shaft to said drive in the form of rocking movement. The actuation of the motor (the rotation of the motor shaft) is carried out to cause the rocking movement of the stroller which, by means of the mechanism and the drive, is transmitted to the stroller.

The drive is suitable for being coupled to a stroller wheel and comprises two facing arms for holding the wheel between them. Both arms are movable to move closer to or farther from one another in a direction of movement for being adapted in this manner to the different thicknesses of the wheel. Different brands and models of baby strollers are known on the market, and as a result baby strollers with wheels of a different diameter and thickness are also known. With the drive used, the apparatus can be adapted to different types of wheels, making it a universal solution for rocking baby strollers. The drive furthermore allows gripping the wheel, the apparatus being coupled to the stroller, and not simply associating the wheel to the apparatus, such that rocking the baby stroller in the conditions and in the manner desired is assured without any risk of unwanted stroller movements (tilting, for example) which may negatively affect the effect to be produced on the baby.

Furthermore, this coupling can be done in a manner that is very simple for the user and without having to lift the stroller, for example, to associate the apparatus with the stroller as occurs in the state of the art, which is very uncomfortable at times due to the weight of the stroller. The drive used also assures the stability of the stroller since it is not arranged under a wheel like in the state of the art, which causes inclination of the stroller, or at least gives an impression of a safer and more stable stroller when using the apparatus, improving how users or possible users view said apparatus.

These and other advantages and features of the invention will become evident in view of the drawings and the detailed description of the invention.

### DESCRIPTION OF THE DRAWINGS

Figure 1 shows a perspective view of a preferred embodiment of the apparatus of the invention, coupled to the wheel of a baby stroller.
Figure 2 shows a perspective view of the apparatus of Figure 1, without the wheel and without part of the cover thereof.
Figure 3a shows in detail the drive of the apparatus of Figure 1, whereby said apparatus is coupled to the baby stroller, with the drive being closed.
Figure 3b shows in detail the drive of the apparatus of Figure 1, whereby said apparatus is coupled to the baby stroller, with the drive being open.
Figure 4a shows a perspective view of the apparatus of Figure 1 without part of the cover thereof, with the second arm in the most extended position.
Figure 4b shows a perspective view of the apparatus of Figure 1 without part of the cover thereof, with the second arm in the most retracted position.
Figure 4c shows a perspective view of the apparatus of Figure 1 without part of the cover thereof, with the second arm in an intermediate position.
Figure 5a shows the attachment point of the first arm with the second arm of the mechanism of the apparatus of Figure 1, in the position closest to a support surface of said apparatus.
Figure 5b shows the attachment point of Figure 5a in the position farthest from the support surface of the apparatus of Figure 1.

### DETAILED DISCLOSURE OF THE INVENTION

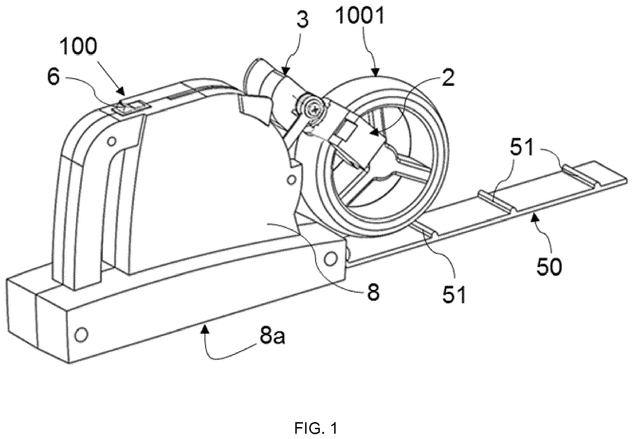

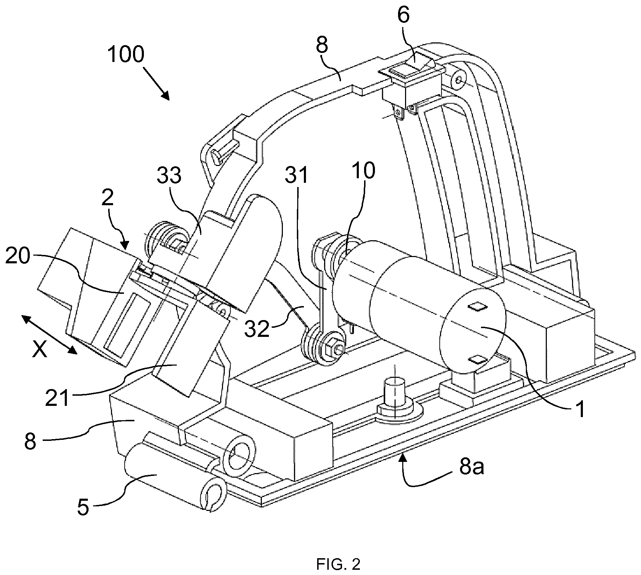

Figure 1 shows one embodiment of the apparatus 100 for rocking baby strollers or other devices for babies comprising wheels of the invention. The apparatus 100 comprises a motor 1 with a motor shaft 10 shown by way of example in Figure 2, a drive 2 for directly causing the rocking movement of the stroller based on the rotation of the motor shaft 10, and a mechanism 3 which is attached to the motor shaft 10 and the drive 2 for transmitting the rotation of the motor shaft 10 to said drive 2 in the form of rocking movement. The motor 1 and the motor shaft 10 as well as part of the mechanism 3 are protected by a cover 8.

To cause the rocking movement of the stroller, the actuation of the motor 1, which comprises a motor shaft 10 preferably rotating in a single direction, is carried out t. This allows using a more cost-effective motor 1. In a preferred embodiment, the actuation of the motor 1 is carried out by means of a switch 6 comprised in the apparatus 100, and arranged in the apparatus 100 such that it is easily accessible for a user. The mechanism 3 transforms the rotation of the motor shaft 2 into movement of the drive 2 in a cyclical forward and backward movement direction, and the drive 2 transfers this movement to the stroller which rocks.

The drive 2 comprises two facing arms 20 and 21 suitable for gripping a stroller wheel 1001 between them like a clamp. This means that the user can easily associate the apparatus 100 with the stroller, coupling it to the stroller as described above. The arms 20 and 21 can comprise a surface with conditions suitable for maintaining the coupling without any risk of the wheel accidentally coming free (or at least for reducing the risk thereof), such as a rough surface and/or a surface made of a specific material (a skid-proof material, for example).

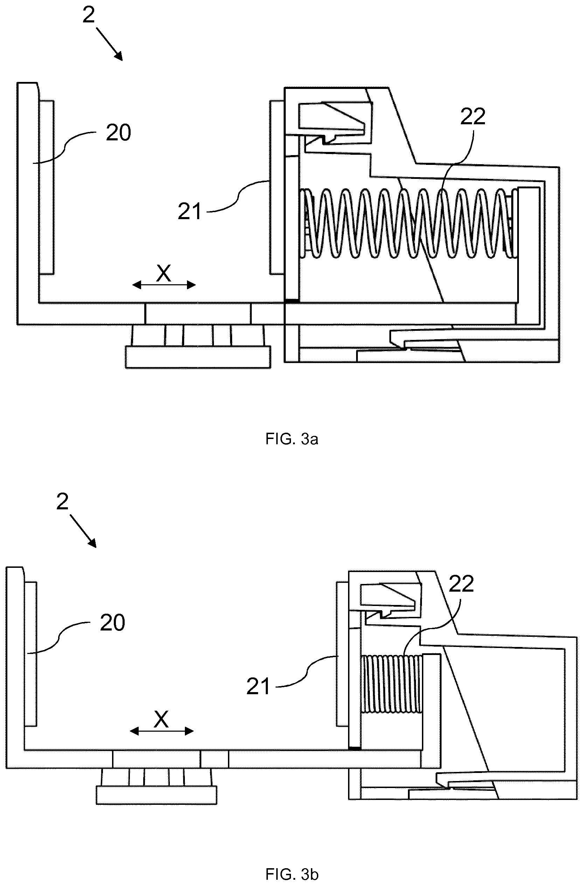

Both arms 20 and 21 are furthermore movable to move closer to or farther from one another in a direction of movement X for being adapted to the different thicknesses of wheel 1001, which allows obtaining a universal apparatus 100 as described above. Preferably, one of the arms 20 or 21 is static whereas the other arm 20 or 21 is the arm which can move. In the preferred embodiment, the drive 2 comprises a spring 22 to allow relative movement between both arms 20 and 21 in the direction of movement X, as shown in Figures 3a and 3b, and use of a spring 22 furthermore allows firmly strengthening the coupling between the wheel 1001 and the drive 2, making the accidental decoupling thereof difficult and therefore improving the safety of the apparatus 100.

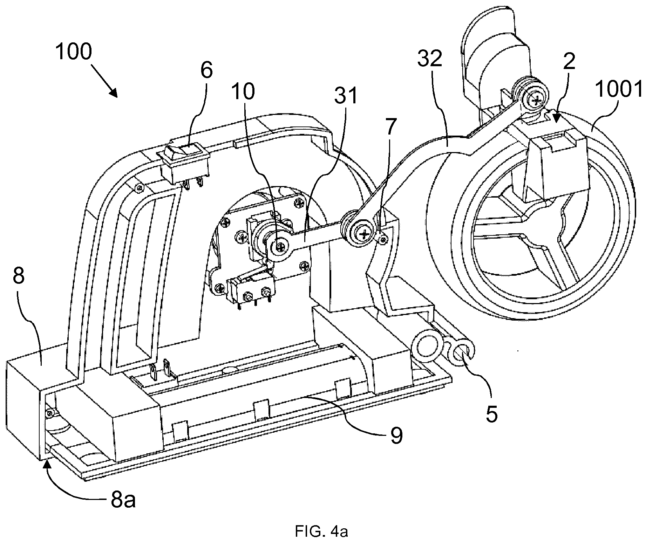

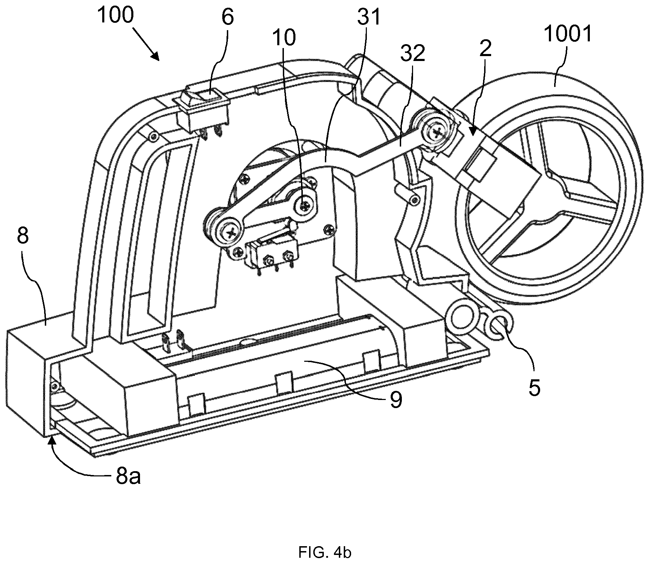

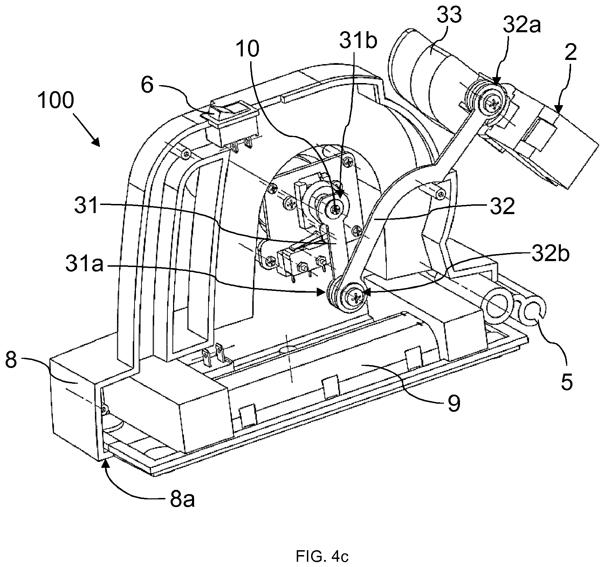

All the embodiments comprise a structure formed by three elements 31, 32 and 33, as can be seen in Figures 4a, 4b and 4c: a first arm 31 which is fixed to the rotating shaft 10 of the motor 1 through an attachment point 31 b, a second arm 32 which is fixed with freedom of rotation to the first arm 31 through an attachment point 31 a spaced from the attachment point 31 b, and a member 33 which is attached with freedom of rotation to the second arm 32 at an attachment point 32a of the second arm 32 spaced from the attachment point 32b through which said second arm 32 is attached to the first arm 31. The drive 2 is fixed to the part 33, such that said drive 2 replicates the movement of the member 33. By fixing the second arm 32 to an attachment point 31a of the first arm 31 spaced from the rotating shaft 10, an eccentric rotation of the second arm 32 with respect to the motor shaft 10 is generated. This eccentric rotation causes a back and forth movement (rocking movement) of the attachment point 32a of said second arm 32, which is transmitted to the member 33 and therefore to the drive 2. The rocking movement is transmitted from the drive 2 to the stroller when a wheel 1001 thereof has been coupled to the drive 2.

When the motor shaft 10 rotates, the first arm 31 rotates integrally with it. The rotation of the first arm 31 causes an eccentric rotation of the attachment point 32a of the second arm 32 due to its attachment with the first arm 31. Figures 4a, 4b and 4c show three different positions of the attachment point 32a of the second arm 32. Therefore, in order to generate the rocking movement the member 33 does not have to be included between the drive 2 and the second arm 32, but the presence of said member 33 provides the drive 2 with freedom of rotation with respect to the second arm 32, and coupling is thereby generated between the apparatus 100 and the wheel 1001 allowing rotation of the wheel 1001 without problems during the rocking movement thereof, unlike what could happen if the drive 2 were attached in a fixed manner to the second arm 32. The member 33 therefore allows transmitting the rocking movement of the second arm 32 to the drive 2, and furthermore allows the rotation of said drive 2 for the suitable movement of the wheel 1001. A safe, comfortable and simple rocking movement of the stroller is therefore achieved for calming the baby and/or for putting the baby to sleep in the stroller. As it is used only to provide rotation to the drive 2 with respect to the second arm 32, the length of the member 33 is not relevant and its inclusion does not negatively affect the size of the apparatus 100 (does not increase the size thereof).

The first arm 31 is used for causing movement of the second arm 32 in both directions and its length determines the distance travelled by the stroller when it performs the rocking movement, such that the manufacturer can decide its length depending on the movement desired for the stroller. Specifically, what generically determines said distance is the distance between the point of said first arm 31 where the second arm 32 is fixed and the point of said first arm 31 which is fixed to the motor shaft 10 (which in the preferred embodiment coincides with the length of the first arm 31).

The length of the second arm 32 is determined so that its attachment point 32a remains outside the cover 8 (which will have a hole not shown in the drawings to allow the second arm 32 to extend therethrough), and so that the movement of the member 33 is not affected by said cover 8 (and therefore by the drive 2 or the wheel 1001).

In the preferred embodiment, the attachment points 31 a and 31 b, 32a and 32b of the arms 31 and 32 are ends of said arms 31 and 32, respectively.

In some embodiments, in the case of the preferred embodiment for example, the apparatus 100 comprises a control unit (not depicted in the drawings) for controlling the motor 1, such that the rotational speed of its motor shaft 10 and therefore the rocking speed can be regulated. The apparatus 100 can therefore comprise different options to be selected by the user thereof, which allows adapting the rocking conditions to each baby in particular.

The apparatus 100 can further comprise at least one device, by way of a limit switch, like in the preferred embodiment thereof for example. The limit switch is associated with a stop position of the motor shaft 10, and in the embodiments with at least one limit switch, the apparatus 100 comprises a control unit communicated with the limit switch. The control unit is preferably the same control unit which allows adjusting the speed of the motor shaft 10, such that said embodiments preferably include the option of adjusting said speed.

With the limit switch, the rotation of the motor shaft 10 in the apparatus 100 is stopped when it is detected that the shaft is in a specific angular position (the stop position), provided that it has been ordered to stop, such that regardless of when it is ordered to stop, the control unit causes the stop only when it detects that said motor shaft 10 is in said stop position (under normal operating conditions). This allows stopping the apparatus 100 in the same position at all times, regardless of when it is ordered to stop, which can result in many advantages. The stop position can be arbitrarily chosen or a specific stop position, such as, for example, the position in which the second arm 32 is retracted the most and the apparatus 100 occupies a smaller space, can be selected.

In the preferred embodiment, the selection of the position S is not arbitrary but it has not been selected depending on the criterion mentioned in the preceding paragraph either, as described below. The limit switch allows knowing when the rotating shaft of the motor 10 is in the stop position (an angular position). As described, the position of the attachment point 32a of the second arm 32 in said travel depends on the angular position of the motor shaft 10, such that the limit switch is indirectly associated with a stop position of said attachment point 32a, corresponding with a stop position of the stroller during the rocking movement thereof. The maximum power consumption of the motor 1 occurs in the moment it is activated, in the moment in which the motor shaft 10 starts to rotate to cause the rocking movement of the stroller. The value of this initial power consumption depends on the force that the motor 1 must apply in that moment to start the rocking movement of the stroller, and it has been verified that the lowest consumption occurs when the attachment point 32a of the second arm 32 is in an intermediate position (when the first arm 31 is arranged perpendicular to the support surface 8a of the apparatus 100, which surface is used for supporting the apparatus 100 on the ground), i.e., when the attachment point 32a of said second arm 32 is in mid-travel (in any direction). The second arm 32 can therefore be in two different positions in those conditions depending on the corresponding rocking direction (the first arm 31 in a vertical position with respect to the support surface 8a, with the attachment point 31a in the position farthest from the support surface 8a, or the first arm 31 in the vertical position with respect to the support surface 8a, with the attachment point 31a in the position closest to the support surface 8a). In the preferred embodiment, the stop position is associated with the arrangement of said attachment point 31a in the position closest to the support surface 8a of the second arm 32 and it is the position shown in Figure 4c, such that it is assured that the maximum power consumption of the motor 1 in the moment of start-up will always be the lowest possible (under normal operating conditions). This allows using low-power motors 1 with the subsequent cost reduction in the motor 1 and therefore in the apparatus 100, and with the subsequent size reduction of the motor 1 and therefore of the apparatus 100.

The apparatus 100 further comprises a projection 7 on which the second arm 32 is supported when it is in the position corresponding with the stop position, such that the motor 1 has to withstand less stress when it is not being used, which can be beneficial for increasing its service life. The second arm 32 can comprise a curved segment which is to be supported on the projection 7, and as a result of said curved shape of said segment, the movement of the second arm 32 is not negatively affected during normal operation of the apparatus 100.

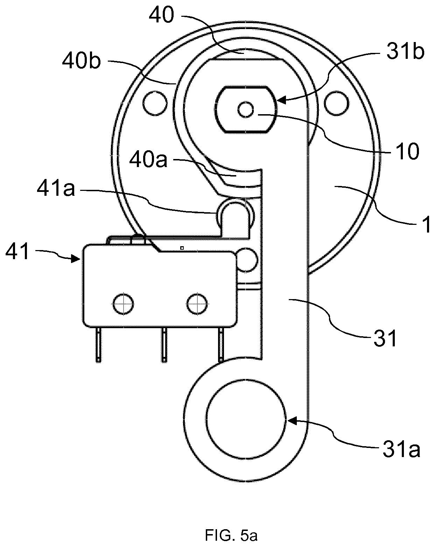

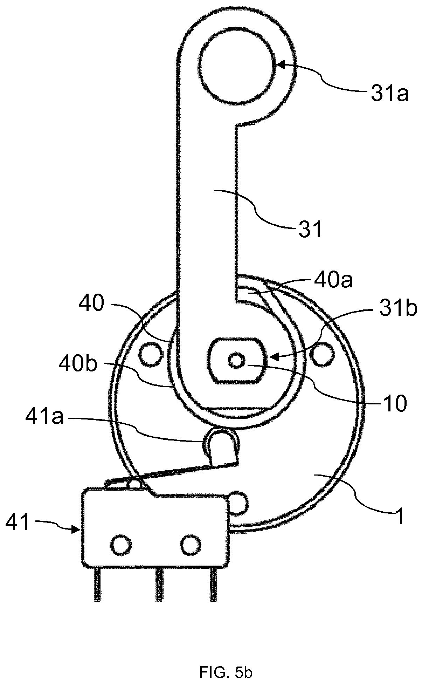

In the preferred embodiment, the limit switch comprises a member 40 which is fixed to the motor shaft 10 as shown in Figures 5a and 5b and rotates integrally with said motor shaft 1. The limit switch also comprises a device 41 cooperating with the member 40 when the motor shaft 10 is in the stop position which, in the preferred embodiment, corresponds with the position of said rotating shaft 10 when the first arm 31 is in the vertical position, with the attachment point 31a in the position closest to the support surface 8a (said position is depicted in Figure 5a). The device 41 is communicated with the control unit, such that when it cooperates with the member 40, the control unit detects that the motor shaft 10 is in the stop position.

In any of its embodiments, such as in the preferred embodiment, for example, the apparatus 100 can further comprise a coupling 5 and a platform 50 which is shown in Figure 1, for example, and which is coupled to said coupling 5, the wheel 1001 being arranged on the platform 50. Said platform 50 comprises at least one alteration 51 on its surface on which the wheel 1001 moves for producing the feeling of there being bumps or uneven terrain while rocking the stroller, which can improve the desired effect on the baby.

In any of its embodiments, such as in the preferred embodiment, for example, the apparatus 100 can further comprise a battery 9 for powering the motor 1. Furthermore, the battery 9 can be rechargeable and the apparatus 100 would comprise in this case a connection to allow recharging same. The apparatus 100 can further comprise a power grid connection to enable powering the motor 1 from a power grid, which can also be used for recharging the battery 9.

## Claims

1. Apparatus for rocking baby strollers or other devices for babies comprising wheels, comprising a motor (1) with a motor shaft (10), a drive (2) for directly causing the rocking movement of the stroller based on the rotation of the motor shaft (10), and a mechanism (3) which is attached to the motor shaft (10) and the drive (2) for transmitting the rotation of the motor shaft (10) to said drive (2) in the form of rocking movement, the drive (2) being suitable for being coupled to a stroller wheel (1001) and comprising two facing arms (20, 21) for holding the wheel (1001) between them, both arms (20, 21) being movable to move closer to or farther from one another in a direction of movement (X), for being adapted to the different thicknesses of the wheel (1001), **characterized in that** the apparatus further comprises a device, by way of a limit switch, and a control unit communicated with the device and the motor (1), the device being configured for indicating to the control unit that the motor shaft (10) is in a stop position, the control unit being configured for causing the stop of the motor (1) when it detects that the motor shaft (10) is in the stop position, once said stop has been ordered.

2. Apparatus according to claim 1, wherein the drive (2) comprises a spring (22) to allow relative movement between both arms (20, 21) in the direction of movement (X).

3. Apparatus according to claim 1 or 2, wherein the mechanism (3) comprises a first arm (31) which is fixed to the rotating shaft (10) of the motor (1) through a first attachment point (31 b), a second arm (32) which is fixed with freedom of rotation to the first arm (31) through a second attachment point (31a) spaced from the first attachment point (31 b), and a member (33) attached to the drive (2) and fixed with freedom of rotation to the second arm (32).

4. Apparatus according to claim 3, wherein the distance of the first arm (31) between the attachment points (31 a, 31 b) of the first arm (31) defines the length of travel of the stroller during the rocking movement thereof, said distance being selected for producing the desired travel.

5. Apparatus according to any of the preceding claims, wherein the device comprises a first element (40) which is fixed to the motor shaft (10) and rotates integrally with said motor shaft (10), and a second element (41) cooperating with the member (40) when the motor shaft (10) is in the desired position, the control unit being configured for detecting said cooperation.

6. Apparatus according to claim 5, wherein the first element (40) of the device comprises a first actuation area (40a) projecting from its outer surface (40b), and the second element (41) of said device comprises a second actuation area (41 a) arranged with respect to the first element (40) such that both actuation areas (40a, 41 a) contact one another when the motor shaft (10) is in the end position, the first element (40) furthermore being fixed to the motor shaft (10) such that its actuation area (40a) coincides with the stop position.

7. Apparatus according to any of the preceding claims, wherein the stop position of the device corresponds with a position of the motor shaft (10) in which the drive (2) is in mid-travel.

8. Apparatus according to claim 7, comprising a support surface (8a) which is used for supporting the apparatus (100) on the ground, the stop position of the rotating shaft (10) corresponding with an arrangement of the first arm (31) perpendicular to the support surface (8a).

9. Apparatus according to claim 8, wherein, in the arrangement of the first arm (31) perpendicular to the support surface (8a) corresponding with the stop position of the motor shaft (10), the point of the first arm (31) to which the second arm (32) is fixed is in its position closest to the support surface (8a).

10. Apparatus according to any of the preceding claims, comprising a switch (6) whereby the motor (1) can be activated and stopped, the switch being communicated with the control unit.

11. Apparatus according to any of claims 1 to 9, comprising a projection (7) on which the second arm (32) is supported when it is in the position corresponding with the stop position, said second arm (32) comprising a curved segment which is supported on the projection (7).

12. Apparatus according to any of the preceding claims, comprising a coupling (5) and a platform (50) coupled to said coupling (5) on which the wheel (1001) is arranged, the platform (50) comprising at least one alteration (51) on its surface on which the wheel (1001) moves.

## Patentansprüche

1. Gerät zum Schaukeln von Kinderwägen oder anderen Vorrichtungen für Babys, die Räder umfassen, umfassend einen Motor (1) mit einer Motorwelle (10), einen Antrieb (2), mit dem die Schaukelbewegung des Kinderwagens auf Basis der Drehung der Motorwelle (10) direkt veranlasst wird, und einen Mechanismus (3), der an der Motorwelle (10) und dem Antrieb (2) angebracht ist, um die Drehung der Motorwelle (10) auf den Antrieb (2) in Form einer Schaukelbewegung zu übertragen, wobei der Antrieb (2) dazu geeignet ist, mit einem Kinderwagenrad (1001) verbunden zu werden, und zwei zugewandte Arme (20, 21) zum Halten des Rads (1001) zwischen diesen umfasst, wobei beide Arme (20, 21) beweglich sind, um in eine Bewegungsrichtung (X) näher zueinander oder weiter voneinander weg bewegt zu werden, um an die unterschiedlichen Dicken des Rads (1001) angepasst zu werden, **dadurch gekennzeichnet, dass** das Gerät ferner eine Vorrichtung in Form eines Endschalters und eine Steuereinheit umfasst, die mit der Vorrichtung und dem Motor (1) in Kommunikation steht, wobei die Vorrichtung so konfiguriert ist, dass sie der Steuereinheit anzeigt, dass die Motorwelle (10) in einer Stoppposition ist, wobei die Steuereinheit so konfiguriert ist, dass sie das Stoppen des Motors (1) veranlasst, wenn sie erkennt, dass die Motorwelle (10) in der Stoppposition ist, nachdem das Stoppen angewiesen wurde.

2. Gerät nach Anspruch 1, wobei der Antrieb (2) eine Feder (22) umfasst, um eine relative Bewegung zwischen beiden Armen (20, 21) in der Bewegungsrichtung (X) zu ermöglichen.

3. Gerät nach Anspruch 1 oder 2, wobei der Mechanismus (3) einen ersten Arm (31), der über einen ersten Anbringungspunkt (31b) an der Drehwelle (10) des Motors (1) befestigt ist, einen zweiten Arm (32), der mit Drehfreiheit über einen zweiten Anbringungspunkt (31a), der vom ersten Anbringungspunkt (31b) beabstandet ist, am ersten Arm (31) befestigt ist, und ein Element (33), das am Antrieb (2) angebracht und mit Drehfreiheit am zweiten Arm (32) befestigt ist, umfasst.

4. Gerät nach Anspruch 3, wobei der Abstand des ersten Arms (31) zwischen den Anbringungspunkten (31 a, 31 b) des ersten Arms (31) die Bewegungsweglänge des Kinderwagens während dessen Schaukelbewegung definiert, wobei der Abstand so ausgewählt wird, dass er den gewünschten Bewegungsweg erzeugt.

5. Gerät nach einem der vorstehenden Ansprüche, wobei die Vorrichtung ein erstes Element (40), das an der Motorwelle (10) befestigt ist und sich mit der Motorwelle (10) integral dreht, und ein zweites Element (41), das mit dem Element (40) zusammenwirkt, wenn die Motorwelle (10) in der gewünschten Position ist, umfasst, wobei die Steuereinheit so konfiguriert ist, dass sie das Zusammenwirken erkennt.

6. Gerät nach Anspruch 5, wobei das erste Element (40) der Vorrichtung einen ersten Betätigungsbereich (40a) umfasst, der von dessen Außenfläche (40b) vorspringt, und das zweite Element (41) der Vorrichtung einen zweiten Betätigungsbereich (41a) umfasst, der in Bezug auf das erste Element (40) so angeordnet ist, dass beide Betätigungsbereiche (40a, 41a) einander berühren, wenn die Motorwelle (10) in der Endposition ist, wobei das erste Element (40) ferner an der Motorwelle (10) befestigt ist, so dass sein Betätigungsbereich (40a) mit der Stoppposition zusammenfällt.

7. Gerät nach einem der vorstehenden Ansprüche, wobei die Stoppposition der Vorrichtung einer Position der Motorwelle (10) entspricht, in der der Antrieb (2) sich in der Zwischenstellung befindet.

8. Gerät nach Anspruch 7, das eine Trägerfläche (8a) umfasst, die verwendet wird, um das Gerät (100) auf dem Boden zu tragen, wobei die Stoppposition der Drehwelle (10) einer Anordnung des ersten Arms (31) lotrecht zur Trägerfläche (8a) entspricht.

9. Gerät nach Anspruch 8, wobei der Punkt des ersten Arms (31), an dem der zweite Arm (32) befestigt ist, bei der Anordnung des ersten Arms (31) lotrecht zur Trägerfläche (8a), die der Stoppposition der Motorwelle (10) entspricht, in dessen der Trägerfläche (8a) am nächsten gelegenen Position ist.

10. Gerät nach einem der vorstehenden Ansprüche, das einen Schalter (6) umfasst, mit dem der Motor (1) aktiviert und gestoppt werden kann, wobei der Schalter mit der Steuereinheit in Kommunikation steht.

11. Gerät nach einem der Ansprüche 1 bis 9, das einen Vorsprung (7) umfasst, auf dem der zweite Arm (32) getragen wird, wenn er in der Position ist, die der Stoppposition entspricht, wobei der zweite Arm (32) ein gekrümmtes Segment umfasst, das auf dem Vorsprung (7) getragen wird.

12. Gerät nach einem der vorstehenden Ansprüche, das ein Verbindungselement (5) und eine mit dem Verbindungselement (5) verbundene Plattform (50) umfasst, auf der das Rad (1001) angeordnet ist, wobei die Plattform (50) auf ihrer Oberfläche, auf der sich das Rad (1001) bewegt, zumindest eine Modifizierung (51) umfasst.

## Revendications

1. Appareil pour balancer des poussettes ou d'autres dispositifs pour bébés, comprenant des roues, comprenant un moteur (1) avec un arbre de moteur (10), un entraînement (2) pour provoquer directement le mouvement de balancement de la poussette en fonction de la rotation de l'arbre de moteur (10) et un mécanisme (3) qui est fixé sur l'arbre de moteur (10) et l'entraînement (2) pour transmettre la rotation de l'arbre de moteur (10) audit entraînement (2) sous la forme du mouvement de balancement, l'entraînement (2) étant approprié pour être couplé à une roue de poussette (1001) et comprenant deux bras en vis-à-vis (20, 21) pour maintenir la roue (1001) entre eux, les deux bras (20, 21) étant mobiles pour se rapprocher ou s'éloigner l'un de l'autre dans une direction de mouvement (X), pour être adaptés aux différentes épaisseurs de la roue (1001), **caractérisé en ce que** l'appareil comprend en outre un dispositif, au moyen d'un commutateur de limite, et d'une unité de commande qui communique avec le dispositif et le moteur (1), le dispositif étant configuré pour indiquer à l'unité de commande que l'arbre de moteur (10) est dans une position d'arrêt, l'unité de commande étant configurée pour provoquer l'arrêt du moteur (1) lorsqu'elle détecte que l'arbre de moteur (10) est dans la position d'arrêt, une fois que ledit arrêt a été commandé.

2. Appareil selon la revendication 1, dans lequel l'entraînement (2) comprend un ressort (22) pour permettre le mouvement relatif entre les deux bras (20, 21) dans la direction du mouvement (X).

3. Appareil selon la revendication 1 ou 2, dans lequel le mécanisme (3) comprend un premier bras (31) qui est fixé à l'arbre rotatif (10) du moteur (1) par le biais d'un premier point de fixation (31 b), un second bras (32) qui est fixé, avec la liberté de rotation, au premier bras (31) par le biais d'un second point de fixation (31 a) espacé du premier point de fixation (31 b), et un élément (33) fixé à l'entraînement (2) et fixé avec une liberté de rotation au second bras (32).

4. Appareil selon la revendication 3, dans lequel la distance du premier bras (31) entre les points de fixation (31 a, 31 b) du premier bras (31) définit la longueur de déplacement de la poussette pendant son mouvement de balancement, ladite distance étant sélectionnée pour produire le déplacement souhaité.

5. Appareil selon l'une quelconque des revendications précédentes, dans lequel le dispositif comprend un premier élément (40) qui est fixé sur l'arbre de moteur (10) et tourne de manière solidaire avec ledit arbre de moteur (10), et un second élément (41) coopérant avec l'élément (40) lorsque l'arbre de moteur (10) est dans la position souhaitée, l'unité de commande étant configurée pour détecter ladite coopération.

6. Appareil selon la revendication 5, dans lequel le premier élément (40) du dispositif comprend une première zone d'actionnement (40a) faisant saillie de sa surface externe (40b) et le second élément (41) dudit dispositif comprend une seconde zone d'actionnement (41 a) agencée par rapport au premier élément (40) de sorte que les deux zones d'actionnement (40a, 41a) sont en contact entre elles lorsque l'arbre de moteur (10) est dans la position d'extrémité, le premier élément (40) étant, en outre, fixé sur l'arbre de moteur (10) de sorte que sa zone d'actionnement (40a) coïncide avec la position d'arrêt.

7. Appareil selon l'une quelconque des revendications précédentes, dans lequel la position d'arrêt du dispositif correspond à une position de l'arbre de moteur (10) dans laquelle l'entraînement (2) est à mi-course.

8. Appareil selon la revendication 7, comprenant une surface de support (8a) qui est utilisée pour supporter l'appareil (100) sur le sol, la position d'arrêt de l'arbre rotatif (10) correspondant à un agencement du premier bras (31) perpendiculaire à la surface de support (8a).

9. Appareil selon la revendication 8, dans lequel, dans l'agencement du premier bras (31) perpendiculaire à la surface de support (8a) correspondant à la position d'arrêt de l'arbre de moteur (10), le point du premier bras (31) sur lequel le second bras (32) est fixé, est dans sa position la plus proche de la surface de support (8a).

10. Appareil selon l'une quelconque des revendications précédentes, comprenant un commutateur (6), moyennant quoi le moteur (1) peut être actionné et arrêté, le commutateur étant en communication avec l'unité de commande.

11. Appareil selon l'une quelconque des revendications 1 à 9, comprenant une saillie (7) sur laquelle le second bras (32) est supporté lorsqu'il est dans la position correspondant à la position d'arrêt, ledit second bras (32) comprenant un segment incurvé qui est supporté sur la saillie (7).

12. Appareil selon l'une quelconque des revendications précédentes, comprenant un couplage (5) et une plateforme (50) couplée audit couplage (5) sur lequel la roue (1001) est agencée, la plateforme (50) comprenant au moins une modification (51) sur sa surface sur laquelle la roue (1001) se déplace.
